(19) **Europäisches Patentamt**

**European Patent Office**

**Office européen des brevets**

(11) **EP 0 864 852 B1**

(12) **EUROPÄISCHE PATENTSCHRIFT**

(45) Veröffentlichungstag und Bekanntmachung des Hinweises auf die Patenterteilung:
**15.06.2005   Patentblatt 2005/24**

(51) Int Cl.⁷: **G01G 23/37**, G01G 23/01

(21) Anmeldenummer: **98103603.1**

(22) Anmeldetag: **02.03.1998**

(54) **Elektronische Waage**

Electronic balance

Balance électronique

(84) Benannte Vertragsstaaten:
**CH DE FR GB LI**

(30) Priorität: **11.03.1997   CH 56997**

(43) Veröffentlichungstag der Anmeldung:
**16.09.1998   Patentblatt 1998/38**

(73) Patentinhaber: **Mettler-Toledo GmbH**
**8606 Greifensee (CH)**

(72) Erfinder:
• **Reichmuth, Arthur**
**8620 Wetzikon (CH)**

• **Klebe, Christian, Dr.**
**8330 Pfäffikon ZH (CH)**

(56) Entgegenhaltungen:
EP-A- 0 424 773          CH-A- 600 307
DE-A- 3 714 540

• **PATENT ABSTRACTS OF JAPAN vol. 016, no. 243 (P-1364), 4. Juni 1992 & JP 04 054418 A (YAMATO SCALE CO LTD), 21. Februar 1992**

## Beschreibung

Gegenstand der Erfindung ist eine elektronische Waage, umfassend einen Messwertaufnehmer mit einer Waagschale und einer Signalverarbeitungsvorrichtung sowie eine Eingabeund Ausgabeeinheit.

Wägeresultate werden durch den Aufstellungsort der Waage und die dort herrschenden Bedingungen, wie etwa Temperaturschwankungen, Vibrationen, elektrostatische Felder, Luftströmungen usw. sowie das Wägegut beeinflusst. Waagen neuerer Bauart sind so ausgerüstet, dass sie erkannte systematische Messabweichungen berücksichtigen und Messwerte durch eine Korrektion berichtigen können. Ein Beispiel dafür ist das automatische Justieren der Waage nach gewissen Temperaturveränderungen. Ein weiteres Beispiel ist die Kalibrierung vor Ort.

Aus der EP-B1 0424773 ist eine Präzisionswaage bekannt, bei der zur Bestimmung der Standardabweichung das dort in der Waage eingebaute und automatisch aufleg- und abhebbare Kalibriergewicht mehrere Male aufgelegt und abgehoben wird. Jedesmal wird der gemessene Wert registriert, danach mit der Signalverarbeitungseinheit die Standardabweichung ermittelt und mit einem vorgegebenen Wert verglichen. Liegt der ermittelte Wert unter dem vorgegebenen, wird ein neuer Kalibrierfaktor errechnet und abgespeichert. Ist allerdings der errechnete Wert hoher als der vorgegebene, so wird kein neuer Kalibrierfaktor abgespeichert, jedoch ein entsprechender Hinweis ausgegeben. Mit dieser bekannten Vorrichtung lässt sich die Waage kalibrieren und die Standardabweichung bestimmen, dies allerdings nur gerade für den Wert des in der Waage eingebauten Kalibriergewichts. Zudem muss die Waage nach einer Fehlermeldung überprüft und erneut in Betrieb gesetzt werden.

Ungeachtet der Berücksichtigung erkannter systematischer Messabweichungen sind Messwerte gleichwohl mit Unsicherheiten behaftet, herrührend von erkannten, aber nicht quantitativ erfassten systematischen Abweichungen, zum Beispiel einer nicht oder nicht genau genug erfassbaren Nichtlinearität, und von zufälligen Abweichungen, zum Beispiel herrührend von einem momentanen Luftzug oder von der Unsicherheit im Wert der Korrektion einer systematischen Messabweichung. Der Benutzer einer präzisen elektronischen Waage weiss um die unvermeidlichen Streuungen, denen seine Gewichtsbestimmungen unterliegen. Aus den Spezifikationen einer Waage lässt sich darauf schliessen, mit welchen Abweichungen etwa gerechnet werden muss, doch kann sich der Bediener daraus kaum ein Bild über die Genauigkeit seiner Messung machen, fehlen dazu doch insbesondere die Einflüsse vor Ort. Sein weitergehendes Interesse zielt aber darauf ab, am jeweiligen Aufstellungsort und für die gegebene Situation die Messunsicherheit für den jeweils angezeigten oder ausgegebenen Messwert zu kennen.

Aus der JP H4-54418 A ist bekannt, wie sich für eine spezielle Anwendung, nämlich das Feststellen der Streuung der Gewichtswerte einer Vielzahl ähnlicher Wägegüter, der Einfluss der Wägevorrichtung weitgehend eliminieren lässt. Darin wird vorgesehen, aus einer Vielzahl von im Normalbetrieb zu wägender Artikel einen beliebigen auszulesen und in einem Testmodus mehrmals unter Normalbetriebsbedingungen über das Wiegeförderband laufen zu lassen. Die CPU 8 ermittelt für jeden so getesteten Artikel die Standardabweichung. Damit wird die Streuung der Wägevorrichtung für eine Last nahe der danach im Normalbetrieb zu wägenden Lasten erhalten. In diesem wird die Streuung der Gewichte der Vielzahl über das Förderband gewogenen Artikel ermittelt. Für eine verlässlichere Angabe über die tatsächliche Streuung unter den Artikeln wird der Einfluss der Wiegemaschine, der aus dem Testlauf bekannt ist, rechnerisch kompensiert. Die Vorrichtung liefert aber keine Angabe zur Einzelmessung.

CH-A- 600 307 beschreibt eine Waage, in der eine Signalverarbeitungsvorrichtung die Wägeergebnisse statistisch auswertet. Aufgabe der vorliegenden Erfindung ist die Schaffung einer elektronischen Waage, die am jeweiligen Aufstellungsort einen Hinweis auf die Genauigkeit liefert, mit der Messungen unter den gegebenen Bedingungen getätigt werden können, und zwar für einen beliebig wählbaren Gewichtswert innerhalb des gesamten Messbereichs der Waage.

Gelöst wird diese Aufgabe durch eine Waage mit den Merkmalen gemäss Patentanspruch 1.

Im Hinblick auf die Bedeutung, welche einigen Begriffen in den nachfolgenden Erläuterungen zukommt, seien diese vorab erwähnt; weitere werden im Text selbst erklärt. Die Genauigkeit ist ein gebräuchlicher Begriff, mit dem intuitiv eine verlässliche Angabe auch für kleinste Werte oder Unterschiede assoziiert wird, der im übrigen aber nicht definiert ist. Je nach Absicht, die mit einer Messung verfolgt wird, kann Genauigkeit zum Beispiel für absolute oder für relative Messunsicherheit oder für die Wiederholbarkeit stehen. Das Messergebnis oder Schlussresultat einer Messung ist der wahrscheinlichste Wert, den man der Messgrösse zuschreibt. Die Messunsicherheit ist das Mass für die Streuung der Werte, welche man vernünftigerweise dem Schlussresultat zuordnet. Die Wiederholbarkeit ist auf dem Gebiet der Wägetechnik definiert als die empirische Standardabweichung oder Wiederholstandardabweichung der Stichprobenmesswerte.

Eine statistische Grösse, beispielsweise die Wiederholbarkeit, kann mit der erfindungsgemässen Waage nicht nur für eine Last bestimmt werden, sondern es lassen sich auf einfache Weise die obere und insbesondere die untere Lastgrenze festlegen, innerhalb welcher die Waage im gewünschten Genauigkeitsbereich arbeitet. Es lasst sich folglich der gesamte Lastbereich bestimmen, in welchem eine Waage noch im gewünschten oder vorgeschriebenen Genauigkeitsbereich zu arbeiten vermag, wobei die Einflussgrössen des Aufstellungsorts, wie unterschiedlich starke Vibrationen, Luftdruck, Umgebungstemperatur usw., bei der Bestimmung dieses Genauigkeitsbereichs mit einfliessen. Es lässt sich damit generell der Genauigkeitsbereich der Waage bestimmen, in dem die Waage am jeweiligen Aufstellungsort mit einem gegebenen Wägegut zu arbeiten vermag.

Die Bestimmung der statistischen Grösse beziehungsweise des resultierenden Genauigkeitsbereichs erfolgt nach Bedarf auf Befehl des Bedieners, zum Beispiel nach Umplazieren der Waage oder nach einem Wetterumschlag. Die Bestimmung kann aber auch in der Waage selbst oder über die Eingabeeinheit vorprogrammiert sein, beispielsweise sie in regelmassigen zeitlichen Abständen durchzuführen. Die Bestimmung erfolgt aus einer Reihe von Wägungen ein und derselben Last. Die Last muss nicht bekannt sein, soll jedoch im Wägebereich der Waage liegen. Als Last kann das Wägegut selbst dienen. Zur Messunsicherheit trägt nicht nur die Waage bei, auch die Eigenschaften des Wägeguts selbst haben einen Anteil daran; es ist daher sinnvoll, diesen Einfluss zu berücksichtigen. Die Signalverarbeitungsvorrichtung veranlasst das wiederholte Auflegen und wieder Abheben der Last. Dies kann in Form einer Anweisung an den Bediener über eine geeignete Ausgabe erfolgen, z. B. eine Anzeige oder eine akustische Aufforderung, welcher der Bediener nachkommt, sei es, dass er selber das Wägegut auflegt, sei es, dass er einen Automaten in Betrieb setzt.

Weitergehende Möglichkeiten ergeben sich, wenn mehrere statistische Grössen beigezogen werden. Höhere Momente der Verteilung der Stichprobenmesswerte erlauben es, eine den Berechnungen zu Grunde gelegte Modellverteilung zu verifizieren oder gar zu modifizieren und so die Aussagekraft der Resultate zu erhöhen.

Ein vorgeschlagener Wert für die Anzahl der Wiederholungen (Auflegen und Abheben des Gewichts) kann intern gespeichert sein, die Bedienerführung der Waage erlaubt es aber auch, dass die Zahl der Wiederholungen vom Bediener selbst vorgegeben werden kann. Da der Bediener ausserdem gewisse Einstellungen der Waage, wie z.B. die Glättung des Messwerts gegen unerwünschte Vibrationen mit Hilfe der Einstellung der Filterstärke, oder die Freigabe des Wägeresultates durch die Einstellung der Stillstandskontrolle vornehmen kann, erhält er die Möglichkeit, für den Aufstellungsort und das vorgegebene Wägegut eine optimale Waageneinstellung zu finden. Dieser Vorgang wird auch als Einstellung der Konfigurationsparameter, oder kurz Konfiguration der Waage bezeichnet. Auf einem Display oder einem gedruckten Protokoll kann die Konfiguration der Waage angezeigt und dem Bediener die momentane Genauigkeit der Waage sichtbar gemacht werden. Er kann sich also jederzeit vergewissern, dass die Waage im gerade benutzten Wägebereich ausreichend genau arbeitet. Die Waage wird nicht ausser Betrieb gesetzt, wenn die ermittelte statistische Grösse einen vorgegebenen Wert überschreitet, sondern der Bediener kann sich durch Auflegen eines etwas grösseren Gewichts an die Stelle herantasten, an der die statistische Grösse gerade noch unter der vorgegebenen Schwelle bleibt; er kann somit stets das minimale Auflagegewicht bestimmen, bei dem die für ihn massgebliche statistische Grösse den vorgegebenen Wert erreicht. Bei Ermittlung und Berücksichtigung mehrerer Grössen kann diese Prozedur entfallen und die minimale Einwaage direkt angegeben werden.

Mit zunehmender Zahl von Messwerten ist es möglich, mit grösser werdender Sicherheit abzuschätzen, wieviele weitere Messungen es braucht, um eine vorgegebene Wiederholstandardabweichung zu erreichen, sofern sie überhaupt erreichbar ist. Diese Abschätzung kann dazu dienen, Zeit zu sparen und eine Messreihe vor Erreichen einer vorgegebenen Zahl n von Wägungen abzubrechen, sei es, weil die gewünschte Wiederholbarkeit bereits verifiziert ist, sei es, weil sie gar nicht erreichbar ist. Eine entsprechende Ausgabe des Resultats kann den Bediener informieren und ihn zu Massnahmen veranlassen, zum Beispiel, eine Konfigurationsänderung vorzunehmen.

Die Messreihe erlaubt es, die zufälligen Messabweichungen unter den gegebenen Umständen in eine Rechnung einzubeziehen, welche auf der Wahrscheinlichkeitsdichtefunktion der Messwerte basiert; sie kann überdies systematische Messabweichungen berücksichtigen. Aus Parameterwerten, die mit einem Modell der Wahrscheinlichkeitsdichtefunktion in Zusammenhang stehen, lassen sich auf diese Weise die jeweils interessierenden Angaben berechnen und in geeigneter Weise weiterverwenden oder ausgeben. So lässt sich basierend auf der durch die Messreihe ermittelten Wiederholbarkeit für ein bestimmtes Vertrauensniveau die Unsicherheit der jeweiligen Wägung, oder umgekehrt, für eine vorgegebene Unsicherheit das Vertrauensniveau bestimmen. Bei je einem vorgegebenen Wert für die relative Unsicherheit und das Vertrauensniveau ist es möglich, die minimale Einwaage zu bestimmen, welche unter den gegebenen Umstanden den gestellten Anforderungen noch genügt. Ferner ist es möglich, für ein vorgegebenes Vertrauensniveau und eine vorgegebene Unsicherheit - oder eine vorgegebene relative Unsicherheit und die Einwaage - die benotigte Wiederholbarkeit zu berechnen und diese mit der ermittelten statistischen Grösse zu vergleichen. Der jeweilige Modus kann vorgegeben oder einstellbar sein. Insbesondere ist vorgesehen, dass das Vertrauensniveau oder die Unsicherheit oder beide Parameterwerte über die Eingabeeinheit einstellbar sind.

Für die Berechnungen wird mit Vorteil ein Modell der Wahrscheinlichkeitsdichtefunktion der Messwerte verwendet, dies in Kenntnis der Charakteristik des Zufallsprozesses. Das Modell kann auch die systematischen Abweichungen berücksichtigen. Die Auswertung der Messreihe erlaubt es, anhand der ermittelten statistischen Grossen das Modell zu verifizieren. Sollten sich die Annahmen nicht bestätigen, ist eine Anpassung des Modells denkbar.

Die Berücksichtigung der systematischen Abweichungen geschieht bezüglich des quantifizierbaren Anteils durch eine Korrektion des Resultats. Der quantitativ nicht erfassbare Anteil hingegen hat dann wiederum zufälligen Charakter und geht als Zufallsgrösse mit modellierter Dichteverteilung in die Rechnung ein. Die quantitativen Grundlagen werden, wo nichts anderes greifbar ist, den Spezifikationen entnommen, welche unter anderem zu diesem Zweck in der Waage selbst abgespeichert sind. Es können aber auch Werte aus Fabrikationsmessungen verwendet werden. Eine weitere Möglichkeit besteht darin, aus den Messungen vor Ort die genannten Werte anzupassen, beispielsweise den Korrekturfaktor für einen quantifizierbaren Anteil leicht zu verändern und die Varianz des quantitativ nicht erfassbaren Anteils herabzusetzen.

Anhand von illustrierten Beispielen wird die Erfindung näher erläutert. Es zeigen: /

Figur 1   ein Blockschaltbild einer Waage;
Figur 2   eine graphische Darstellung des Ablaufs der Bestimmung der Wiederholbarkeit;
Figur 3   ein mögliches Protokoll der Bestimmung des Genauigkeitsbereichs mit einer Auswahl von Messwerten;
Figur 4   das Diagramm der Modellverteilung einer Reihe von Messwerten einer Wägung unter Wiederholbedingungen, und
Figur 5   das Hilfsdiagramm zur Berechnung der minimalen Einwaage.

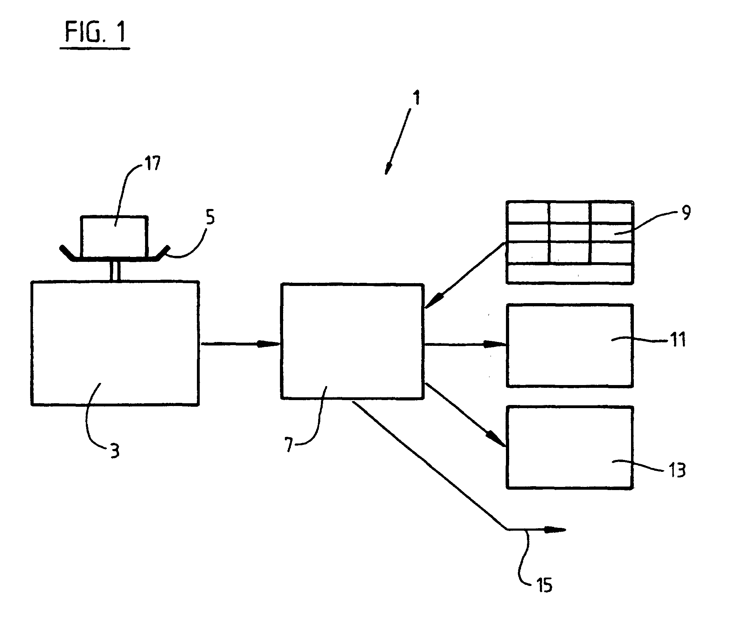

Das in Figur 1 dargestellte Blockschaltbild einer Waage 1 umfasst eine Messzelle 3, auf welcher eine Waagschale 5 zur Aufnahme des Wägeguts 17 angebracht ist. In diesem Zusammenhang ist der in der Wägetechnik gebräuchliche Begriff Waagschale selbstverständlich nicht auf schalenformige Lastträger eingeschränkt zu verstehen; es fallen auch Plattformen, Pfannen oder andere Gefässe und ähnliches darunter. Das in der Messzelle 3 entstehende Signal, das dem Gewicht des Wägeguts 17 entspricht, wird an eine Signalverarbeitungsvorrichtung 7 weitergeleitet. Diese Signalverarbeitungsvorrichtung 7 kann über eine Tastatur 9 durch den Bediener beeinflusst werden und kann dem Bediener über eine Anzeigevorrichtung 11 das Messergebnis und andere Informationen über den Zustand der Waage 1 mitteilen. Über diese Ausstattung einer Waage hinaus kann an die Signalverarbeitungsvorrichtung 7 auch noch ein Drucker 13 angeschlossen werden und es können Daten über eine in der Signalverarbeitungsvorrichtung 7 enthaltenen Schnittstelle über die Datenleitung 15 an weitere Datenverarbeitungseinheiten übermittelt werden. Weiter können über dieselbe, entsprechend gestaltete oder eine weitere Schnittstelle in Ergänzung zur Tastatur 9 oder an deren Stelle die Eingabemöglichkeiten erweitert sein, zum Beispiel mit einer Sprach- oder Rechnereingabe. Im übrigen ist die Signalverarbeitungsvorrichtung in der Lage, auf abgespeicherte Daten zuzugreifen und Daten abzuspeichern, sei es in sich selbst, sei es über die Datenleitung 15 auf einem anderen Medium.

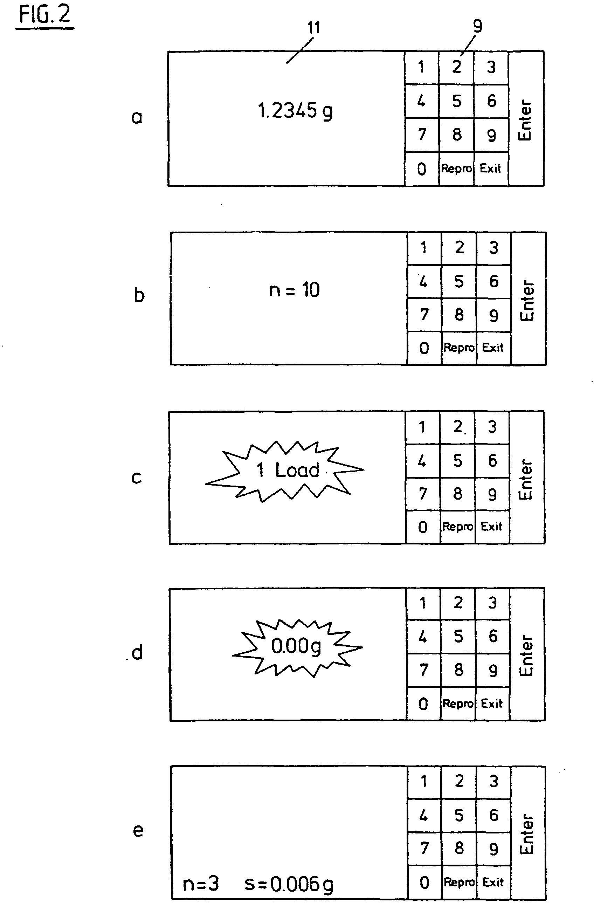

Die Figur 2 zeigt als eine Möglichkeit zur Ermittlung einer statistischen Grösse die Bedienerführung für die Bestimmung der Wiederholbarkeit für Wägungen am jeweiligen Aufstellungsort der Waage 1. Durch Drukken der Taste "Repro" wird der Überprüfungsmodus aufgerufen. Daraufhin wird in der Anzeigeeinheit 11 die intern gespeicherte Anzahl n der Wägungen dargestellt (Figur 2.b). Nun kann der Bediener entweder den vorgegebenen Wert n durch Betätigen der Taste "Enter" bestätigen oder eine Zahl nach eigenem Wunsch auf der Tastatur 9 eingeben und wiederum mit der Taste "Enter" bestätigen. Danach verlangt die Waage beispielsweise durch Blinken der Anzeige oder akustisch das erste Auflegen des Probegewichts (Figur 2.c) und bei nachfolgendem Blinken der 0-Anzeige die Aufforderung, die Probe wieder abzuheben (Figur 2.d).

Diese Vorgange (Figur 2.c und 2.d) werden nun noch (n-1) mal wiederholt. Wenn bereits vor Erreichen der gewählten Anzahl n die gewünschte Wiederholbarkeit erreicht worden ist, kann die Messreihe abgebrochen werden durch Betätigen der Taste "Exit". Ebenso kann die Messreihe jederzeit abgebrochen werden, wenn aus Versehen eine falsche Last aufgelegt worden ist oder aus anderen Gründen abgebrochen werden soll, zum Beispiel weil die bis anhin registrierten Messwerte ergeben, dass die gewünschte Wiederholbarkeit unter den gegebenen äusseren Bedingungen und der eingestellten Konfiguration der Waage 1 nicht erreichbar sind.

Als Last, welche auf die Waagschale 5 aufgelegt wird, kann ein beliebiger Gegenstand gewählt werden, dessen Masse selbstverständlich innerhalb des Wägebereichs der Waage 1 liegen muss. Vorzugsweise wird dazu eine Last gewählt, die im wesentlichen derjenigen entspricht, welche nachfolgend auf der Waage 1 exakt bestimmt werden soll, oder eine solche, die nahe der unteren Grenze des Wägebereichs bzw. der kleinsten zu wägenden Last liegt. Es kann besonders vorteilhaft sein, statt eines Ersatzgewichts direkt das Wägegut 17 (z.B. einen Becher, ein Gefäss, einen Aufnahmebehälter, ein Filterelement, ein Werkstück etc.) für die Bestimmung zu verwenden. Durch die Verwendung des hauptsächlich zu wiegenden Objekts ist der Waagentest praxisnah. Es lassen sich nämlich damit Beinflussungen der Wiederholbarkeit, welche vom Wägegut stammen, in die Bestimmung miteinbeziehen.

Spätestens nach Abschluss der n Wägungen zeigt die Waage das Resultat der Messreihe an, druckt es aus oder übermittelt es an ein geeignetes Peripheriegerät. Figur 2.e zeigt eine mögliche Darstellung dieser Resultate in der Anzeige. So ist links die Anzahl der durchgeführten Messungen n = 3 aufgeführt, und in der Mitte die ermittelte Standardabweichung s = 0.006 g.

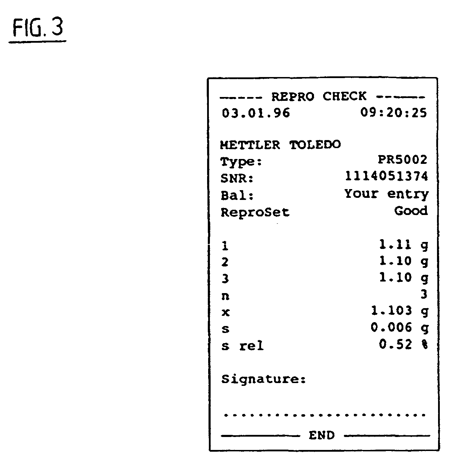

Weitere Daten lassen sich beispielsweise auf einem Drucker ausgeben. Figur 3 zeigt eine mögliche Ausgestaltung eines solchen Protokolls. Neben Datum und Uhrzeit sind dort - zur besseren Identifizierung der getesteten Waage - der Waagentyp, seine Serienummer sowie ein frei wahlbarer Text aufgeführt.

Weiterhin wird mit dem Begriff "ReproSet" die Einstellung der Stillstandskontrolle der Waage dokumentiert. Daran anschliessend sind die drei individuellen Wägeergebnisse aufgelistet, die Anzahl Wagungen (n = 3), der Mittelwert (x = 1,103 g) und die Standardabweichung (s = 0,006 g) der Mess-Serie. Die auf den Mittelwert bezogene Standardabweichung s,rel = s/x (auch relative Standardabweichung oder relative Wiederholbarkeit genannt) erscheint auf der letzten Zeile als s,rel = 0,52%.

Aus dem beispielhaften Protokoll kann abgelesen werden, dass eine Last des gleichen Wägeguttyps von 1,1 g oder mehr mit einer relativen Wiederholbarkeit von ≤ 0,52% bestimmt werden kann. Der Bediener kann folglich jederzeit, insbesondere vor grösseren Messreihen, vorzugsweise direkt mit Hilfe der zu bestimmenden Last die relative Standardabweichung oder eine andere statistische Grösse der Waage bestimmen und erhält dadurch sofort Auskunft, ob die Messungen mit der erforderlichen Genauigkeit im gewünschten Messbereich durchgeführt werden können. Statistische Grössen können nebst der im Beispiel angeführten Standardabweichung auch folgende Funktionen sein: Mittelwert, Minimum, Maximum.

Von Interesse können ferner das dritte und das vierte Moment der Verteilung der Messwerte beziehungsweise deren normierte Werte, die Schiefe und die Überhöhung, sein, lassen sich daraus doch mit guter Näherung die Verteilungsfunktion berechnen oder zu Grunde gelegte Modellverteilungen verifizieren. So muss zum Beispiel für symmetrische Verteilungen die Schiefe verschwinden und für Normalverteilungen die Überhöhung 3 betragen. Die Verteilung ist von Bedeutung für den Zusammenhang zwischen den Vertrauensgrenzen und dem Vertrauensniveau, also wenn es darum geht, die statistische Sicherheit für den ermittelten oder vorgegebenen Wertebereich zu kennen.

Es können nebst der mindestens einen statistischen Grosse zusätzlich Konfigurationsparameter angezeigt oder ausgegeben werden, im Beispiel die Einstellung der Stillstandskontrolle auf dem Druckprotokoll. Solche Angaben erleichtern die Übersicht, wenn es darum geht, ein Ergebnis zu beurteilen und allenfalls eine Änderung der Konfiguration der Waage vorzunehmen.

Die Wiederholbarkeit hängt von der Konfiguration der Waage ab. Wird zum Beispiel an einem vibrationsarmen, gunstigen Aufstellungsort eine sehr kleine Wiederholstandardabweichung erreicht, könnten die Wirkungen eines Vibrationsfilters und der Stillstandskontrolle reduziert werden, was danach ein schnelleres wägen ermöglicht. Die Signalverarbeitungsvorrichtung kann daher je nach Ergebnis der Berechnung der Wiederholbarkeit eine Änderung der Konfiguration der Waage veranlassen, indem sie über die Ausgabeeinheit dem Bediener einen Vorschlag unterbreitet oder die Konfiguration der Waage selbsttätig neu einstellt.

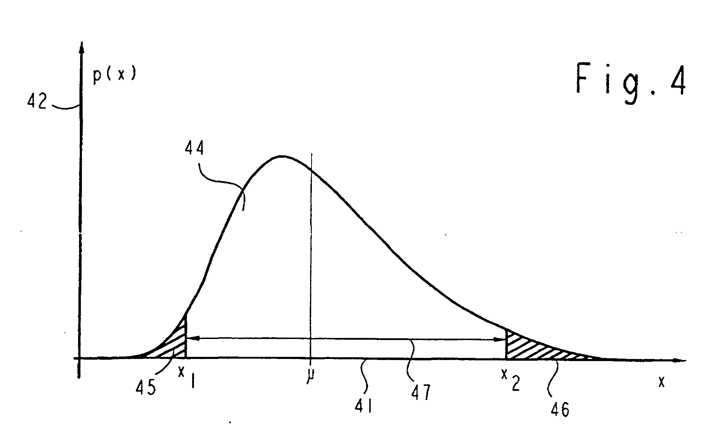

Die erfindungsgemässe Waage vermag ausserdem, Angaben über die Unsicherheit oder das Vertrauensniveau einer einzelnen Wägung, die wünschbare Wiederholbarkeit oder die minimale Einwaage zu liefern. Die Grundlagen dafür ergeben sich aus /der Statistik. Die Bedeutung der genannten Parameter und die massgebenden Zusammenhänge sind anhand der Figur 4 erläutert, die das Diagramm der Modellverteilung einer Reihe von Messwerten einer Wägung unter Wiederholbedingungen zeigt. Sie stellt die theoretische Verteilung der Gesamtheit aller grundsätzlich möglichen Wiederholungen einer Messung dar, welche unter unveränderten Bedingungen erhalten werden (Wiederholbedingungen). Über der Abszisse 41 mit den Messwerten x ist in Richtung der Ordinate 42 die Wahrscheinlichkeitsdichte p aufgetragen. Der Verlauf der Wahrscheinlichkeitsdichtefunktion p(x) - manchmal auch mit Dichteverteilung oder kurz Verteilung (p(x) einer Zufallsgrösse x) bezeichnet - hängt von der Varianz ab, dem Mittelwert der quadrierten Abweichungen der Messwerte vom arithmetischen Mittelwert oder Erwartungswert μ. Im gezeichneten Beispiel liegt μ neben dem Maximum der Verteilung. p(x) kann auch durch weitere Parameter bestimmt sein. Die Wahrscheinlichkeit dafür, dass ein Messwert x in einem Bereich zwischen $x_1$ und $x_2$ mit $x_1 < x_2$ liegt entspricht der nicht schraffierten Fläche 44. Sie lässt sich berechnen aus der Wahrscheinlichkeitsfunktion P(x), gegeben durch

$$P(x_i) = \int_{-\infty}^{x_i} p(x)\,dx$$

Die gesamte Fläche unter der Kurve beträgt 1. Die links schraffierte Fläche 45 entspricht der Wahrscheinlichkeit $P(x_1)$ dafür, dass ein Messwert kleiner als $x_1$ ist, die rechts schraffierte Fläche 46 der Wahrscheinlichkeit $1-P(x_2)$ dafür, dass ein Messwert grösser als $x_2$ ist.

Wird bestimmt, dass aus der Grundgesamtheit lediglich ein /kleiner Anteil $P_1$ von Messwerten unterhalb eines gewissen Werts liegen sollen, so ergibt sich daraus über die Verteilung p(x) bzw. die dazugehörige Wahrscheinlichkeitsfunktion P(x) und die Auflösung der Gleichung $P(x) = P_1$ nach x die sogenannte untere Vertrauensgrenze, im Diagramm z. B. bei $x = x_1$. Analog wird mit der oberen Vertrauensgrenze verfahren: Wird bestimmt, dass aus der Grundgesamtheit lediglich ein kleiner Anteil $1-P_2$ von Messwerten oberhalb eines gewissen Werts liegen sollen, so ergibt sich über die Auflösung der Gleichung $P(x) = 1-P_2$ nach x die obere Vertrauensgrenze, im Diagramm z. B. bei $x = x_2$. Der Bereich 47 zwischen $x_1$ und $x_2$ wird Vertrauensbereich ge-

nannt, die Wahrscheinlichkeit dafür, dass ein Messwert in diesen Bereich fällt - im Bild ist das die nicht schraffierte Fläche 44 - die Vertrauenswahrscheinlichkeit oder das Vertrauensniveau. Ein anderer Begriff in diesem Zusammenhang ist die Eintretenswahrscheinlichkeit P = 1-α, worin α die Summe der beiden ausserhalb des Vertrauensbereichs liegenden Wahrscheinlichkeitsanteile $P_1+(1-P_2)$ bezeichnet, also die Summe der links schraffierten Fläche 45 und der rechts schraffierten Fläche 46. Einleitend wurde die Messunsicherheit definiert als Mass für die Streuung der Werte, welche man vernünftigerweise dem Schlussresultat zuordnet. Handelt es sich, wie im vorliegenden Fall um eine einfache Messreihe zur Bestimmung des wahrscheinlichsten Werts, so ist das Schlussresultat oder (berichtigte) Messergebnis der Mittelwert. Die Streuung ist aus der Verteilung ersichtlich. Üblicherweise wird dann der Betrag der Differenz zwischen Mittelwert und Vertrauensgrenze als Unsicherheit bezeichnet. /

Mit der geschilderten Art der Festlegung der Vertrauensgrenze ist gleichzeitig das Vertrauensniveau mit $1-P_1-(1-P_2) = P_2-P_1$ festgelegt. Vertrauensniveau und Vertrauensgrenzen sind also über die Verteilung fest miteinander verknüpft, welche aber ihrerseits von der Varianz abhängt. Werden die Vertrauensgrenzen als absolute Grössen festgelegt, beispielsweise als Grenzwerte bei Abfullwägungen, und ein bestimmtes Vertrauensniveau verlangt, so resultiert daraus eine Anforderung an die Verteilung, indirekt also an die Varianz. Die Varianz einer Stichprobe von Messwerten aus der Grundgesamtheit, welch letztere die Basis für die Modellverteilung liefert, konvergiert nach Wahrscheinlichkeit zur Varianz der Grundgesamtheit, die empirische Standardabweichung s als positive Wurzel der Varianz der Stichprobe entsprechend zur Standardabweichung σ. Aus einer ermittelten empirischen Standardabweichung beziehungsweise der Wiederholbarkeit lässt sich daher auf die geltende Verteilung schliessen, mit umso grösserer Sicherheit, je grösser die Stichprobe ist, das heisst, je mehr Messwerte zur Ermittlung beitragen. Für Stichproben von kleinem Umfang sind ein adäquater Signifikanztest und entsprechende Korrekturen angezeigt. Nach etwas Rechenaufwand lässt sich daher bei absolut vorgegebenen Vertrauensgrenzen, einem geforderten Vertrauensniveau und in Kenntnis der Charakteristik der Verteilung bestimmen, welche Wiederholbarkeit gegeben sein muss, um die Anforderungen erfüllen zu können. Oder, anders ausgedrückt: Werden bei gegebenem Modell der Wahrscheinlichkeitsdichtefunktion die Parameter Vertrauensniveau und Unsicherheit - beziehungsweise untere und obere Unsicherheit bei nicht symmetrischen Verhältnissen - vorgegeben, wodurch auch die Vertrauensgrenzen festgelegt sind, so ist implizite die Varianz bzw. deren Quadratwurzel, die Standardabweichung, gegeben und kann berechnet werden. Ein Vergleich zwischen dieser erforderlichen Standardabweichung für das gleichzeitige Erreichen der vorgegebenen Unsicherheit und Eintretenswahrscheinlichkeit und der tatsächlich erreichten, durch die Messreihe ermittelten Wiederholbarkeit, liefert einen Hinweis darauf, ob oder wie gut die Waage die geforderten Bedingungen zu erfüllen vermag. Das Ergebnis des Vergleichs kann ein simples "Wiederholbarkeit kleiner/grösser als gefordert" bzw. "genügend/ungenügend", aber auch eine Verhältniszahl zwischen empirischer Standardabweichung und Standardabweichung sein. Wird die relative Unsicherheit fest vorgegeben, so ist das Ergebnis des Vergleichs von der jeweiligen Einwaage abhängig und es lässt sich für jede einzelne Einwaage feststellen, ob es zu befriedigen vermag.

Die Signalverarbeitungsvorrichtung einer entsprechend ausgerüsteten elektronischen Waage, die auf ein Modell der Wahrscheinlichkeitsdichtefunktion der Messwerte zugreifen kann, ist also in der Lage, auf Grund der ermittelten statistischen Grösse, vorzugsweise der empirischen Standardabweichung, und gegebenen Parameterwerten weitere Werte zu ermitteln. Die Parameterwerte können aus in der Waage gespeicherten Spezifikationen oder Fabrikmessungen oder Messungen vor Ort hergeleitet werden. Sie können aber auch über die Eingabeeinheit eingestellt werden. Sowohl die hergeleiteten bzw. eingestellten Parameterwerte als auch die ermittelten Werte können über die Ausgabeeinheit angezeigt oder ausgedruckt oder sonstwie ausgegeben werden.

Ein Modell lasst sich durch eine Reihenentwicklung der Momente der Verteilungsfunktion darstellen. Ermittelt die Waage aus der Messreihe mehrere statistische Grössen, insbesondere die höheren Momente, so ist sie in der Lage zu überprüfen, wie gut die Übereinstimmung mit dem zu Grunde liegenden Modell ist. Das Ergebnis einer derartigen Verifikation kann zum Beispiel angezeigt werden und Anlass für eine Modifikation des Modells sein. Es ist aber auch möglich, das Modell direkt zu modifizieren, indem zum Beispiel die Reihe der Momente für die Berechnung der Verteilung benützt wird.

Die Verteilung der Messgrössen in der Technik kann oft in guter Näherung durch das Modell der Gaussschen Normalverteilung wiedergegeben werden. Charakteristisch daran sind unter anderem die Symmetrie bezüglich des Mittelwerts und die vollständige Beschreibung durch die beiden Modellparameter Mittelwert und Varianz. Resultiert eine Zufallsgrösse aus einer Mehrzahl von zufälligen Ereignissen, die voneinander ganz oder weitgehend unabhängig sind, so nähert sich die Häufigkeitsverteilung der Resultierenden ebenfalls rasch der Gaussschen Normalverteilung, selbst wenn die einzelnen Prozesse nicht normalverteilt sind.

In der Normalverteilung ist der Zusammenhang zwischen der Standardabweichung und dem Vertrauensniveau wohl bekannt. Für symmetrisch zum Mittelwert liegende Vertrauensgrenzen bei $\mu \pm \sigma$ beträgt das Vertrauensniveau 0,683, bei $\mu \pm 2\sigma$ 0,955 und bei $\mu + 3\sigma$ 0,997. Für elektronische Waagen hoher Genauigkeit wird üblicherweise ein hohes Vertrauensniveau mit symmetrisch zum Mittelwert liegenden Vertrauensgrenzen gefordert und die Unsicherheit generell auf 3σ festgelegt, wenn nicht ausdrücklich etwas anderes angegeben wird.

In Kenntnis dieser Zusammenhänge ist es mit der erfinderischen elektronischen Waage möglich, am jeweiligen Aufstellungsort und unter den gegebenen Verhältnissen gezielt die interessierenden Angaben zu einer Messung zu ermitteln und zur Verfügung zu halten. Aus der Messreihe der mehrfach aufgelegten und wieder abgehobenen, beliebig wählbaren Last ergibt sich nebst einem Mittelwert als Messergebnis die empirische Standardabweichung (hier auch mit Wiederholbarkeit bezeichnet). Für diese Art von Messung kann mit guter Näherung eine Normalverteilung zu Grunde gelegt werden. Für die weitere Berechnung sind dann keine anderen Erhebungen mehr nötig. Allenfalls kann noch ein Signifikanztest gemacht werden. Für jede anschliessende Einwaage mit einer Masse in der Grössenordnung von jener der zuvor mehrfach aufgelegten Last lässt sich mittelbar die Unsicherheit für ein gegebenes Vertrauensniveau angeben. Sei m das Messergebnis für die Einwaage, s die ermittelte empirische Standardabweichung und P die verlangte Eintretenswahrscheinlichkeit bzw. das Vertrauensniveau. Die vollständige Anzeige für eine einzelne Messung nahe m hat dann die Form $m_i \pm U$ bei P = y%. Sei beispielsweise s ermittelt worden zu 0,006 g, $m_i$ mit 1,103 g gemessen und ein Vertrauensniveau von 95,5% vorgeschrieben. Letzteres wird bei der Normalverteilung für eine Unsicherheit von 2σ erreicht. Genügende statistische Sicherheit vorausgesetzt, kann σ mit s gleichgesetzt werden. Die Unsicherheit beträgt also 2s. Die Anzeige für die Einwaage lautet damit "1,103 ± 0,012 g für P = 95,5%". Man erkennt daraus sofort, wie eine gute Wiederholbarkeit, also ein kleines s, zu einem zuverlässigeren Resultat beiträgt - die Unsicherheit oder einzuräumende Toleranz ist entsprechend kleiner.

Wird umgekehrt die zulässige Unsicherheit vorgegeben, zum Beispiel mit U = 10 mg, so entspricht dies einer Vertrauensgrenze bei x2 = U/s = 1,67 in der normierten Gaussschen Verteilung, womit sich aus der Fehlerfunktion der Wert P = 0,905 ergibt. Die Anzeige lautet somit "1,103 g mit P = 90,5% innerhalb vorgegebener ± 0,010 g" oder ähnlich.

Besteht die Forderung, bei gegebener Unsicherheit ein bestimmtes Vertrauensniveau einzuhalten, so muss die Wiederholbarkeit entsprechend klein sein. Diese Vorgabe kann dazu dienen, die Anzahl der Wägungen beim Bestimmen der empirischen Standardabweichung zu begrenzen. Sei in Anlehnung an obige Beispiele ein Vertrauensniveau von P = 99,7% (3σ-Wert) für U = 10 mg gefordert, so berechnet sich s zu 3,33 mg.

Für andere Modellverteilungen als die Normalverteilung gelten die vorstehenden Überlegungen sinngemäss. Allerdings sind unter Umständen mehr Grössen vorzugeben, z. B. zwei Unsicherheiten bzw. beide Vertrauensgrenzen bei Asymmetrie. Unter Vorgabe der notwendigen Anzahl von Werten lässt sich der jeweils interessierende Wert ermitteln.

Könnte ein unveränderliches Wagegut auf einer idealen Waage mehrfach gewogen werden, ergäbe sich gleichwohl eine gewisse Streuung in den erfassten Messwerten, herrührend von unabhängigen zufälligen Einflüssen, etwa von einem schwankenden Erdfeld, Luftzug oder Ähnlichem. Diese zufälligen Messabweichungen weisen eine empirische Standardabweichung $s_A$ auf. Sie erhöht sich, wenn das Wägegut selbst zufälligen Änderungen unterworfen ist, zum Beispiel, weil es Gase aufnehmen oder/und wieder abgeben kann oder sich bewegende Teilmassen enthält. Eine reale Waage tragt aus sich selbst heraus zufällige Anteile an einen Messwert bei, die ebenfalls in $s_A$ Eingang finden. Derartige Anteile rühren zum Beispiel her von den Vibrationen der Unterlage oder den Unzulänglichkeiten der Messzelle, insbesondere dem Rauschen einer Referenzquelle, aber auch dem Quantisierungsrauschen bei der Analog-Digitalwandlung oder dem Eigenrauschen der Kraftkompensation. Alle diese Zufälligkeiten äussern sich im Ergebnis der Stichprobe. Sie ergeben einen auf statistischer Analyse beruhenden Anteil $U_A$ an der Messunsicherheit, die sogenannte Typ A Unsicherheit.

Diese Unsicherheit kann über das Mass hinaus, welches durch die Waage selbst gegeben ist, wesentlich durch die Eigenschaften des Wägeguts bestimmt sein. So kann zum Beispiel eine hygroskopische oder eine leicht flüchtige Substanz zu einer grossen Streuung der Messwerte führen. In einem solchen Fall ist es sinnvoll, ja unerlässlich, den Einfluss des Wägeguts mit zu berücksichtigen. Es wäre unrichtig, nur die Eigenschaften der Waage zur Bestimmung der Unsicherheit heranzuziehen. Es ist ein Vorteil der hier beschriebenen Waage, alle Anteile gleichzeitig einbeziehen zu können.

Zum Anteil $U_A$ hinzu kommen Beiträge erkannter, aber quantitativ nicht erfasster systematischer Abweichungen sowie Beiträge systematisch- oder zufallsbedingter Unsicherheiten von an den Messwerten vorgenommenen Korrekturen. Beispielsweise können während der Fabrikation der Waage deren Temperaturempfindlichkeit ausgemessen, ein oder mehrere Fabrikparameter in der Waage abgespeichert und für eine Korrektionsfunktion beim Betreiben der Waage verwendet werden. Am Aufstellungsort bestehen möglicherweise Temperaturunterschiede zwischen dem Innern der Waage und der Umgebung, was eine andere Empfindlichkeit bewirkt, oder der Temperatursensor liefert schwankende Ergebnisse. Ausserdem bestehen unbekannte Abweichungen zwischen dem tatsächlichen Temperaturgang und der modellierten Korrektion. Derartige, auf andere Weise als auf statistischer Analyse beruhende geschätzte Beiträge tragen ebenfalls zur Messunsicherheit bei, die hier mit $U_B$ bezeichnet sei, die sogenannte Typ B Unsicherheit. Die beiden Anteile $U_A$ und $U_B$ sind in aller Regel voneinander unabhängig. Beruhen zudem beide auf gleicher Vertrauenswahrscheinlichkeit, so können sie zu einer kombinierten Unsicherheit zusammengesetzt werden, welche sich aus der Wurzel der Summe der Quadrate ergibt.

Die möglichen Einflusse von systematischen Abweichungen, wie etwa der Nichtlinearität, der Eckenlastempfindlichkeit, der Temperaturabhängigkeit der Empfindlichkeit oder der Kalibrierungenauigkeiten werden für einen Waagentyp in den Spezifikationen angegeben. Spezifikationen sind quantitative Angaben über das Verhalten von Waagen, die in der Regel für alle Individuen eines Gerätetyps gültig sind. Werden sie in der Waage selbst gespeichert oder über eine Datenleitung zugänglich gemacht, können sie dazu dienen, den Beitrag $U_B$ abzuschätzen und in die Berechnung der Unsicherheit einfliessen. Wünschbar ist allerdings, individuelle Parameter berücksichtigen zu können. Dies ist möglich, wenn aus Fabrikations- oder Servicemessungen die individuellen Grössen abgespeichert werden, auf die dann die Waage zugreifen kann. Fabrikparameter sind quantitative Angaben über das Verhalten einer Waage, welche anlässlich der Herstellung für das individuelle Gerät gemessen werden. Noch genauere Messergebnisse lassen sich erzielen, wenn in $U_B$ die - mit Vorteil kurz vor oder nach der Wägung erhobenen - Verhältnisse vor Ort einfliessen können. So ist es zum Beispiel denkbar, mit mehreren Messreihen die Unterschiede in den Anzeigen festzustellen, die sich bei Auflage der Last an verschiedenen, vorgegebenen Orten auf der Waagschale ergeben, woraus auf die momentane Ekkenlastempfindlichkeit geschlossen werden kann. Sie kann als derzeit gültiger, individueller Wert im Beitrag $U_B$ berücksichtigt werden. Erweist sie sich als zu gross, kann eine Anweisung resultieren, wonach Lasten zwingend in engen Grenzen immer am selben Ort auf die Waagschale zu legen sind. Oder die Information kann bei nachfolgenden Messungen zusammen mit Angaben über den jeweiligen Auflageort dazu verwendet werden, eine Korrektion des Messwerts vorzunehmen. Aber nicht nur die Beiträge systematischer Messabweichungen lassen sich aus den verschiedenen Quellen, das sind die Messungen vor Ort, die Messungen in der Fabrikation oder der Abruf gespeicherter Spezifikationen, herleiten, dasselbe gilt für die Bestimmung von Parameterwerten, die mit dem Modell der Wahrscheinlichkeitsdichtefunktion in Zusammenhang stehen.

Die Unsicherheit setzt sich also aus mehreren Anteilen zusammen, die unterschiedlich lastabhängig sind. Je nach Anwendung interessiert die Unsicherheit nicht als absolute Grosse, sondern als auf die Einwaage bezogene Grosse, die relative Unsicherheit u. Diese ist definiert als $u = U/m_i$. Die Angabe erfolgt meist in Prozenten. Die Einhaltung einer vorgegebenen relativen Unsicherheit ist umso schwieriger, je kleiner die Einwaage ist - entscheidend ist daher hier der konstante Teil der Unsicherheit. Andererseits bewirken die lastabhangigen Quellen der Messunsicherheit, dass die relative Unsicherheit u auch für grosse Lasten nicht beliebig klein wird. Für die Bestimmung der minimalen Einwaage ist der lastabhängige Anteil vernachlässigbar, solange adäquate Anforderungen gestellt sind. Wird allerdings eine Messreihe mit einem Gewicht durchgeführt, das weit von der minimalen Einwaage entfernt ist, und wird überdies eine relative Unsicherheit angestrebt, die nicht um Grössenordnungen grösser ist als der Proportionalitätsfaktor der lastabhangigen Unsicherheit, kann letzterer nicht ohne weiteres ausser acht gelassen werden. Es empfiehlt sich dann, eine weitere Messreihe mit einem deutlich anderen Gewicht aufzunehmen und die Minimaleinwaage durch eine Extrapolation zu berechnen. In erster Näherung lässt sich zum Beispiel die Unsicherheit als Summe einer linearen Funktion der Last und einem konstanten Teil angeben.

Im vorangehend erwähnten Beispiel wurde als Messergebnis ein Mittelwert x = m = 1,103 g bei einer empirischen Standardabweichung s = 6 mg eruiert. Wird nun verlangt, die relative Unsicherheit dürfe bei einem Vertrauensniveau P = 95,5% ($2\sigma$-Wert) die Grenze von 1% nicht übersteigen (u = $10^{-2}$), so ergibt sich unmittelbar die minimale Einwaage, welche die Bedingungen noch erfüllt mit $m_{min} = U/u = 2s/u = 0,012/10^{-2}$ g = 1,2 g. Hierbei wurde der Anteil systematischer Abweichungen in die Unsicherheit nicht eingerechnet. In einem anderen Fall werde mit einer genaueren 200 g Waage zunächst nahe bei Vollast ein Wertepaar mit einem Mittelwert $m_p$ = 198,543 g und einer Widerholbarkeit (empirischen Standardabweichung) $s_p$ = 0,70 mg ermittelt. Aus Spezifikationen und Fabrikationsmessungen sei bekannt, dass für erkannte, aber quantitativ nicht erfasste systematische Abweichungen für ein Vertrauensniveau von P = 99,7% bei Vollast ein Unsicherheitsanteil von 3,0 mg, bei kleiner Last ein solcher von 0,6 mg zu verrechnen ist. Gefordert wird eine relative Unsicherheit von höchstens 0,01% bei einem Vertrauensniveau von P = 99,7%. Für einen Messwert bei $m_p$ beträgt sie demnach etwa 0,0018%, resultierend aus

$$U_p \approx \sqrt{(k \cdot s_p)^2 + U_{BF}^2} = 3,67 \text{ mg mit k = 3.}$$

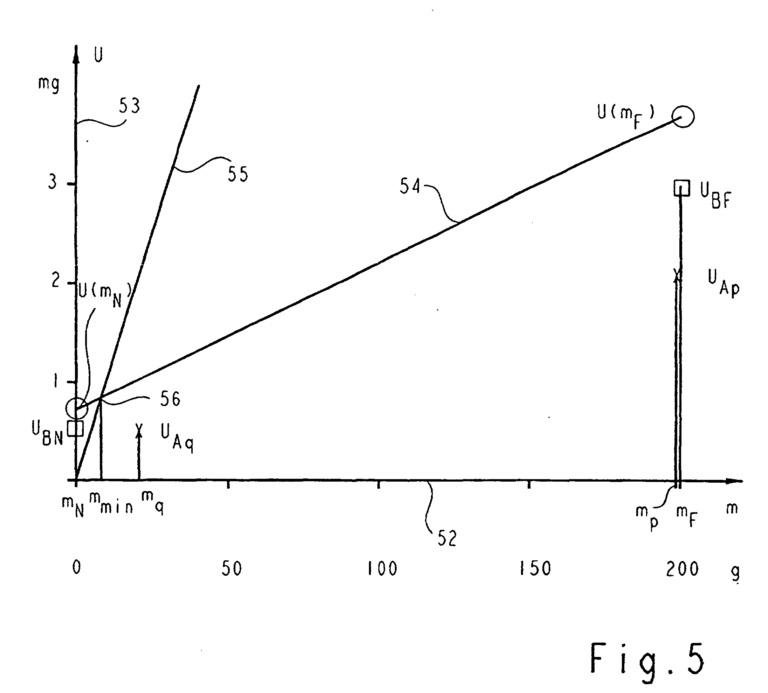

Eine direkte Berechnung auf die nämliche Art wie oben führt auf ein zu hohes Mindestgewicht von 36,7 g. Eine weitere Messreihe ergebe nämlich ein Wertepaar $m_q$ = 21,337 g mit $s_q$ = 0,18 mg. Anhand der Figur 5 wird erläutert, wie mit Hilfe dieses weiteren Messergebnisses die minimale Einwaage unter den gegebenen Bedingungen zuverlässiger ermittelt werden kann. Die Abszisse 52 enthält den Messbereich der Waage, der von Nullast $m_N$ bis zur Vollast $m_F$ reicht; in Richtung der Ordinate 53 sind die Unsicherheiten $U_i$ eingetragen. Die Typ B Unsicherheit $U_B$ bei Nullast $m_N$ ist mit $U_{BN}$ bezeichnet und betragt im Beispiel 0,6 mg, jene bei Vollast $m_F$ mit $U_{BF}$ = 3,0 mg. An den Stellen der gemessenen Lasten $m_q$ und $m_p$ sind die zugeordneten Typ A Unsicherheiten als k-fache empirische Standardabweichungen $U_{Aq} = k \cdot s_q$ = 0,54 mg bzw. $U_{Ap} = k \cdot s_q$ = 2,10 mg mit k = 3 eingetragen. Gesucht ist der Verlauf der kombinierten Unsicherheit U(m), so dass sich $m_{min}$ als untere Grenze bestimmen lässt, für welche die Bedingung $u \geq U(m)/m$ erfüllt ist. In erster Näherung lassen sich $U_A(m)$ und $U_B(m)$ je durch eine lineare Interpolation zwischen den Stützwerten an beliebiger Stelle berechnen. Sind zuverlässigere Informationen vorhanden, insbesondere mehr Stützstellen, können auch andere Berechnungsverfahren angewendet werden. Daraus ergibt sich $U(m)$ als Quadratzwurzel der Quadrate von $U_A(m)$ und $U_B(m)$. In der Figur zeigt die Kurve 54 den so erhaltenen Verlauf von $U(m) = [U_A(m)^2 + U_B(m)^2]^{\frac{1}{2}}$. Die Abweichung von einer Geraden ist nur sehr gering. Es kann aber durchaus hinreichend sein, auch U(m) linear anzunähern. Wichtig ist es, die Tendenz des Verlaufs der Unsicherheit über den ganzen Bereich zu erfassen und diesen berücksichtigen zu können, was die erfinderische Waage zu leisten im Stande ist. Als Kurve 55 - eine Gerade - ist der Verlauf von $U_g(m) = u_g \cdot m$ eingetragen, worin $u_g = 0,01\%$ die geforderte relative Unsicherheit ist, die nicht überschritten werden darf. Die beiden Funktionen $U_g(m)$ und U (m), die Kurven 55 und 54, schneiden sich im Schnittpunkt 56; der zugehörige Abszissenwert ist $m_{min}$. Die Berechnung liefert das Resultat für die minimale Einwaage mit $m_{min} = 8,17$ g.

Die Abstützung auf die statistischen Grössen von zwei Messreihen erlaubt es also, die Minimaleinwaage für spezifische Anforderungen einfach und genau zu ermitteln; die relative Unsicherheit und das Vertrauensniveau werden in geeigneter Weise über die Eingabeeinheit vorgegeben.

**Patentansprüche**

1. Elektronische Waage, umfassend einen Messwertaufnehmer (3) mit einer Waagschale (5), eine Eingabeeinheit (9), eine Ausgabeeinheit (11,13) und eine Signalverarbeitungsvorrichtung (7), die unter anderem auf abgespeicherte Daten zugreifen und Daten abspeichern kann, auf welcher Waage aus einer durch wiederholtes Auflegen einer Last auf die Waagschale (5) und wieder Abheben der Last von der Waagschale (5) entstehenden Messreihe mit Hilfe der Signalverarbeitungsvorrichtung (7) mindestens eine statistische Grösse ermittelt, gespeichert, ausgegeben und/oder für nachfolgende Messungen zur Verfügung gehalten werden kann, **dadurch gekennzeichnet, dass** die Waage für jedes einzelne Messergebnis auf Grund der mindestens einen statistischen Grösse sowie mindestens eines mit einer Wahrscheinlichkeitsdichtefunktion in Zusammenhang stehenden Parameterwerts weitere Werte ermitteln und ausgeben kann, welche eine Aussage über die Genauigkeit des Messergebnisses machen.

2. Waage nach Anspruch 1, **dadurch gekennzeichnet, dass** die Signalverarbeitungsvorrichtung (7) das wiederholte Auflegen und Abheben der Last auf die Waagschale (5) veranlasst.

3. Waage nach Anspruch 1, **dadurch gekennzeichnet, dass** als Last eine innerhalb des Wägebereichs beliebig wählbare Last verwendet werden kann.

4. Waage nach Anspruch 3, **dadurch gekennzeichnet, dass** das für die Wägung vorgesehene Wägegut (17) als Last verwendet wird.

5. Waage nach Anspruch 1, **dadurch gekennzeichnet, dass** als statistische Grösse die Standardabweichung, der Mittelwert, die relative Standardabweichung, das Minimum oder das Maximum bestimmt wird.

6. Waage nach Anspruch 5, **dadurch gekennzeichnet, dass** ausserdem ein höheres Moment bestimmt wird.

7. Waage nach einem der Ansprüche 1 bis 6, **dadurch gekennzeichnet, dass** zusammen mit der mindestens einen statistischen Grösse mindestens ein Konfigurationsparameter der Waage ausgegeben wird.

8. Waage nach einem der Ansprüche 1 bis 7, **dadurch gekennzeichnet, dass** die Anzahl n Wägungen der Messreihe als Datum abgespeichert ist, auf das die Signalverarbeitungsvorrichtung (7) zugreifen kann.

9. Waage nach Anspruch 8, **dadurch gekennzeichnet, dass** die Anzahl n Wägungen der Messreihe über die Eingabeeinheit einstellbar ist.

10. Waage nach Anspruch 8 oder 9, **dadurch gekennzeichnet, dass** die Messreihe vor dem Erreichen der voreingestellten Anzahl n Wägungen abbrechbar ist.

11. Waage nach Anspruch 10, **dadurch gekennzeichnet, dass** die Signalverarbeitungsvorrichtung (7) während der Messreihe laufend die Wiederholbarkeit berechnet, bei Unterschreiten eines vorgegebenen Werts den Abbruch der Messreihe veranlasst und/oder laufend oder nach Beendigung der Messreihe die Zahl weiterer benötigter Messwerte angibt, um den vorgegebenen Wert zu erreichen.

12. Waage nach Anspruch 10, **dadurch gekennzeichnet, dass** die Signalverarbeitungsvorrichtung (7) je nach Ergebnis der Wiederholbarkeitsberechnung eine Konfigurationsänderung der Waage veranlasst.

13. Waage nach Anspruch 1, **dadurch gekennzeich-**

**net, dass** in der Waage mehrere Parameterwerte gespeichert sind, die zusammen ein Modell einer Wahrscheinlichkeitsdichtefunktion von Messwerten beschreiben.

14. Waage nach Anspruch 13, **dadurch gekennzeichnet, dass** die Signalverarbeitungsvorrichtung (7) das Modell der Wahrscheinlichkeitsdichtefunktion der Messwerte auf Grund der ermittelten Werte verifiziert und gegebenenfalls modifiziert.

15. Waage nach Anspruch 1, **dadurch gekennzeichnet, dass** Parameterwerte über die Eingabeeinheit (9) einstellbar sind.

16. Waage nach Anspruch 1, **dadurch gekennzeichnet, dass** die der Ermittlung zu Grunde liegenden Angaben aus Messungen vor Ort gewonnen und gespeichert, aus Messungen in der Fabrikation gewonnen und gespeichert, oder aus gespeicherten Spezifikationen der Waage hergeleitet werden.

17. Waage nach Anspruch 1, **dadurch gekennzeichnet, dass** die Signalverarbeitungsvorrichtung (7) die Werte ausgibt.

18. Waage nach Anspruch 1, **dadurch gekennzeichnet, dass** die Signalverarbeitungsvorrichtung (7) auf Grund eines vorgegebenen Parameterwerts aus der Menge der Werte für die Parameter Unsicherheit und Vertrauensniveau für jede einzelne Messung den jeweils anderen Wert ermittelt.

19. Waage nach Anspruch 1, **dadurch gekennzeichnet, dass** die Signalverarbeitungsvorrichtung (7) auf Grund einer vorgegebenen relativen Unsicherheit und eines vorgegebenen Vertrauensniveaus die minimale Einwaage bestimmt.

20. Waage nach Anspruch 1, **dadurch gekennzeichnet, dass** die Signalverarbeitungsvorrichtung (7) auf Grund einer vorgegebenen Unsicherheit und eines vorgegebenen Vertrauensniveaus die erforderliche Standardabweichung berechnet.

21. Waage nach Anspruch 1, **dadurch gekennzeichnet, dass** die Signalverarbeitungsvorrichtung (7) auf Grund einer vorgegebenen relativen Unsicherheit, eines vorgegebenen Vertrauensniveaus und einer Einwaage die erforderliche Standardabweichung berechnet.

22. Waage nach Anspruch 20 oder 21, **dadurch gekennzeichnet, dass** die ermittelte mindestens eine statistische Grösse die Wiederholbarkeit einschliesst und die Signalverarbeitungsvorrichtung (7) einen Vergleichswert zwischen der Wiederholbarkeit und der erforderlichen Standardabweichung ermittelt.

23. Waage nach Anspruch 1, **dadurch gekennzeichnet, dass** die Signalverarbeitungsvorrichtung (7) für die Ermittlung des jeweiligen Werts nebst den aus der Messreihe gewonnenen Daten auch Angaben zu systematischen Abweichungen, insbesondere zur Nichtlinearität oder Eckenlastempfindlichkeit, mit berücksichtigt.

24. Waage nach Anspruch 23, **dadurch gekennzeichnet, dass** die Angaben zu den systematischen Abweichungen aus Messungen vor Ort gewonnen und gespeichert, aus Messungen in der Fabrikation gewonnen und gespeichert, oder aus gespeicherten Spezifikationen der Waage hergeleitet werden.

**Claims**

1. Electronic balance, comprising a measuring transducer (3) with a weighing pan (5), an input unit (9), an output unit (11, 13), and a signal-processing device (7) which is operable, among other functions, to access stored data and to store data, wherein - based on a series of measurements made on said balance by repeatedly putting a load on the weighing pan (5) and removing the load again from the weighing pan (5) - at least one statistical quantity can by means of said signal-processing device (7) be calculated, stored, delivered as output, and/or kept available for subsequent measurements, **characterized in that** - based on the at least one statistical quantity and based on at least one parameter value related to a probability density function - the balance can calculate and deliver further values for each individual measuring result, wherein said further values provide a statement about the accuracy of the measuring result.

2. Balance according to claim 1, **characterized in that** the signal-processing device (7) initiates the repeated operations of putting a load on the weighing pan (5) and removing the load again from the weighing pan (5).

3. Balance according to claim 1, **characterized in that** said load can be made up of an amount of load that is arbitrarily selected within the weighing range.

4. Balance according to claim 3 **characterized in that** the weighing sample (17) is used for said load.

5. Balance according to claim 1, **characterized in that** said statistical quantity being calculated is constituted by the standard deviation, the mean value, the relative standard deviation, the minimum, or the maximum.

**6.** Balance according to claim 5, **characterized in that** additionally a moment of a higher order is calculated.

**7.** Balance according to one of the claims 1 to 6, **characterized in that** at least one configuration parameter of the balance is delivered as output together with the at least one statistical quantity.

**8.** Balance according to one of the claims 1 to 7, **characterized in that** the number n of the weighings in the measurement series is stored as a data item that can be accessed by the signal-processing device (7).

**9.** Balance according to claim 8, **characterized in that** the number n of the weighings in the measurement series can be set by way of the input unit.

**10.** Balance according to claim 8 or 9, **characterized in that** the measurement series can be terminated before the preset number n of weighings has been reached.

**11.** Balance according to claim 10, **characterized in that** the signal-processing device (7) in the course of the measurement series continuously calculates the repeatability and causes the measurement series to be terminated if the repeatability is found to be less than a specified value, and/or **characterized in that** the signal-processing device indicates either continuously or after finishing the measurement series how many additional measurement values are needed in order to reach the specified value.

**12.** Balance according to claim 10, **characterized in that** the signal-processing device (7) causes the configuration of the balance to be changed depending on the result of the repeatability calculation.

**13.** Balance according to claim 1, **characterized in that** a plurality of parameter values are stored in the balance, wherein said parameter values together describe a model of a probability density function of measurement values.

**14.** Balance according to claim 13, **characterized in that** the signal-processing device (7) validates the model of the probability density function of the measurement values on the basis of the calculated values and modifies the model if necessary.

**15.** Balance according to claim 1, **characterized in that** the parameter values can be set by way of the input unit (9).

**16.** Balance according to claim 1, **characterized in that** the data on which the calculation is based are either obtained and stored from measurements on location, or obtained and stored from measurements at the factory, or derived from stored specifications of the balance.

**17.** Balance according to claim 1, **characterized in that** the signal-processing device (7) delivers the values as output.

**18.** Balance according to claim 1, **characterized in that** for each individual measurement the signal-processing device (7) uses one given parameter value from the set of values for the parameters uncertainty and confidence level and determines the respective other value.

**19.** Balance according to claim 1, **characterized in that** based on a given relative uncertainty and a given confidence level the signal-processing device (7) determines the minimum sample amount that can be weighed on the balance.

**20.** Balance according to claim 1, **characterized in that** based on a given uncertainty and a given confidence level the signal-processing device (7) calculates the required standard deviation.

**21.** Balance according to claim 1, **characterized in that** based on a given relative uncertainty, a given confidence level and a weighed sample quantity, the signal-processing device (7) determines the required standard deviation.

**22.** Balance according to claim 20 or 21, **characterized in that** the calculated at least one statistical quantity includes the repeatability and that the signal-processing device (7) determines a comparison value between the repeatability and the required standard deviation.

**23.** Balance according to claim 1, **characterized in that** for the calculation of each value, the signal-processing device (7) takes into account not only the data obtained from the measurement series but also data relating to systematic deviations which include in particular non-linearity, or sensitivity to eccentrically placed loads.

**24.** Balance according to claim 23, **characterized in that** the data relating to the systematic deviations are either obtained and stored from measurements on location, or obtained and stored from measurements at the factory, or derived from stored specifications of the balance.

**Revendications**

1. Balance électronique, comprenant un enregistreur de valeur mesurée (3) avec un plateau (5), une unité d'entrée (9), une unité de sortie (11, 13) et un dispositif de traitement de signal (7), qui peut recourir entre autres à des données stockées et peut stocker des données, balance sur laquelle au moins une grandeur statistique peut être calculée à partir d'une série de mesures à effectuer par la pose répétée d'une charge sur le plateau (5) et l'enlèvement de la charge du plateau (5) à l'aide du dispositif de traitement de signal (7), être stockée, éditée et/ou mise à disposition pour des mesures consécutives, **caractérisée en ce que** la balance peut déterminer et éditer pour chaque résultat de mesure individuel sur la base de la au moins une grandeur statique et au moins d'une valeur de paramètre en rapport avec une fonction de densité de probabilité, d'autres valeurs qui donnent une information sur la précision du résultat de mesure.

2. Balance selon la revendication 1, **caractérisée en ce que** le dispositif de traitement de signal (7) ordonne la pose et le soulèvement répétés de la charge sur le plateau (5).

3. Balance selon la revendication 1, **caractérisée en ce qu'**une charge pouvant être choisie de façon quelconque à l'intérieur de la plage de pesée peut être utilisée comme charge.

4. Balance selon la revendication 3, **caractérisée en ce que** l'article à peser (17) prévu pour la pesée est utilisé comme charge.

5. Balance selon la revendication 1, **caractérisée en ce qu'**on détermine comme grandeur statique l'écart standard, la valeur moyenne, l'écart standard relatif, le minimum ou le maximum.

6. Balance selon la revendication 5, **caractérisée en ce qu'**on détermine en plus un couple assez élevé.

7. Balance selon l'une quelconque des revendications 1 à 6, **caractérisée en ce qu'**au moins un paramètre de configuration de la balance est édité en même temps que la au moins une valeur statistique.

8. Balance selon l'une quelconque des revendications 1 à 7, **caractérisée en ce que** le nombre n de pesées de la série de mesures est mémorisé comme donnée, à laquelle le dispositif de traitement de signal (7) peut recourir.

9. Balance selon la revendication 8, **caractérisée en ce que** le nombre n de pesée de la série de mesures peut être réglé par l'unité d'entrée.

10. Balance selon la revendication 8 ou 9, **caractérisée en ce que** la série de mesures peut être interrompue avant d'atteindre le nombre n de pesées préréglé.

11. Balance selon la revendication 10, **caractérisée en ce que** le dispositif de traitement de signal (7) calcule la reproductibilité de façon permanente pendant la série de mesures, ordonne l'interruption de la série de mesures en cas de sous-dépassement d'une valeur prédéfinie et/ou indique de façon permanente ou après la fin de la série de mesures le nombre d'autres valeurs de mesure nécessaires pour obtenir la valeur prédéfinie.

12. Balance selon la revendication 10, **caractérisée en ce que** le dispositif de traitement de signal (7) demande une modification de configuration de la balance en fonction du résultat du calcul de la reproductibilité.

13. Balance selon la revendication 1, **caractérisée en ce que** dans la balance sont mémorisées plusieurs valeurs de paramètre qui décrivent ensemble un modèle d'une fonction de densité de probabilité de valeurs mesurées.

14. Balance selon la revendication 13, **caractérisée en ce que** le dispositif de traitement de signal (7) vérifie et éventuellement modifie le modèle de fonction de densité de probabilité des valeurs mesurées sur la base des valeurs déterminées.

15. Balance selon la revendication 1, **caractérisée en ce que** des valeurs de paramètre peuvent être réglées au moyen de l'unité d'entrée (9).

16. Balance selon la revendication 1, **caractérisée en ce que** les indications à la base du calcul sont obtenues à partir de mesures effectuées sur place et stockées, sont obtenues à partir de mesures effectuées lors de la fabrication et stockées, ou déduites de spécifications mémorisées de la balance.

17. Balance selon la revendication 1, **caractérisée en ce que** le dispositif de traitement de signal (7) édite les valeurs.

18. Balance selon la revendication 1, **caractérisée en ce que** le dispositif de traitement de signal (7) détermine sur la base d'une valeur de paramètre prédéfinie à partir de la quantité des valeurs pour les paramètres incertitude et niveau de confiance pour chaque valeur individuelle l'autre valeur respective.

19. Balance selon la revendication 1, **caractérisée en ce que** le dispositif de traitement de signal (7) détermine la quantité pesée minimum sur la base d'une incertitude relative prédéfinie et d'un niveau de confiance prédéfini.

20. Balance selon la revendication 1, **caractérisée en ce que** le dispositif de traitement de signal (7) calcule l'écart standard nécessaire sur la base d'une incertitude prédéfinie et d'un niveau de confiance prédéfini.

21. Balance selon la revendication 1, **caractérisée en ce que** le dispositif de traitement de signal (7) calcule l'écart standard nécessaire sur la base d'une incertitude relative prédéfinie, d'un niveau de confiance prédéfini et d'une quantité pesée.

22. Balance selon la revendication 20 ou 21, **caractérisée en ce que** l'au moins une grandeur statistique calculée inclut la reproductibilité et le dispositif de traitement de signal (7) détermine une valeur de comparaison entre la reproductibilité et l'écart standard nécessaire.

23. Balance selon la revendication 1, **caractérisée en ce que** le dispositif de traitement de signal (7) tient compte également pour la détermination de la valeur respective, outre les données obtenues à partir de la série de mesures, également d'indications concernant des écarts systématiques, en particulier la non-linéarité ou la sensibilité à la charge de référence.

24. Balance selon la revendication 23, **caractérisée en ce que** les indications concernant les écarts systématiques sont obtenues à partir de mesures effectuées sur place et stockées, sont obtenues à partir de mesures effectuées lors de la fabrication et stockées, ou déduites de spécifications mémorisées de la balance.

FIG. 1

FIG. 2

a | 1.2345 g

b | n = 10

c | 1 Load

d | 0.00g

e | n=3   s=0.006g

FIG. 3

```
----- REPRO CHECK ------
03.01.96          09:20:25

METTLER TOLEDO
Type:              PR5002
SNR:           1114051374
Bal:           Your entry
ReproSet             Good

1                    1.11 g
2                    1.10 g
3                    1.10 g
n                         3
x                   1.103 g
s                   0.006 g
s rel               0.52 %

Signature:

.........................
---------- END ----------
```

Fig. 4

Fig. 5